# EUROPEAN PATENT APPLICATION

(11) **EP 4 339 443 A1**
(43) Date of publication of application: **20.03.2024**
(21) Application number: 23191242.9
(22) Date of filing: 14.08.2023
(51) Int. Cl.: F02K 1/12

(54) **A VARIABLE-GEOMETRY CONVERGENT-DIVERGENT EXHAUST NOZZLE**

(30) Priority: 13.09.2022 GB 202213334
(71) Applicant: Rolls-Royce plc, London N1 9FX (GB)
(72) Inventor: Colebrooke, Jack, Derby, DE24 8BJ (GB)
(74) Representative: Rolls-Royce plc

(57) **Abstract**

There is described a variable-geometry convergent-divergent exhaust nozzle (30) for a gas turbine engine (10). The variable-geometry convergent-divergent exhaust nozzle (30) comprises: an exhaust duct (32) configured to receive an exhaust flow of gas from a combustor (15) of the gas turbine engine (10); a first flap assembly (202) comprising a first proximal flap (206) and a first distal flap (208); and a second flap assembly (204) comprising a second proximal flap (210) and a second distal flap (212). The first proximal flap (206) is rotatably coupled to the exhaust duct (32) and comprises a first entry surface (214) that in part defines a nozzle passageway (38), the nozzle passageway (38) being configured to convey the exhaust flow of gas to an exterior (40) of the gas turbine engine (10). The second proximal flap (210) is rotatably coupled to the exhaust duct (32) and comprises a second entry surface (218) that in part defines the nozzle passageway (38). The first distal flap (208) is rotatably coupled to the first proximal flap (206). The second distal flap (212) is rotatably coupled to the second proximal flap (210). The first distal flap (208) comprises a first converging surface (250) and a first diverging surface (252) angled with respect to the first converging surface (250). The second distal flap (212) comprises a second converging surface (256) and a second diverging surface (258) angled with respect to the second converging surface (256). The first converging surface (250) and the second converging surface (256) define at least in part a convergent portion (262) of the nozzle passageway (38). The first diverging surface (252) and the second diverging surface (258) define at least in part a divergent portion (264) of the nozzle passageway (38).

## Description

### Field of the invention

The present disclosure relates to a variable-geometry convergent-divergent exhaust nozzle.

### Background

It is known for gas turbine engines to comprise variable-geometry exhaust nozzles. Such variable-geometry exhaust nozzles include exhaust flaps that may be individually controlled to vary the exit area of the exhaust nozzle. It is also known for gas turbine engines to have variable-geometry convergent-divergent exhaust nozzles. In such exhaust nozzles, the exhaust flaps may comprise respective convergent and divergent portions that are hingedly coupled together at a hinge located at the throat of the exhaust nozzle. In such arrangements, the positions of the convergent and divergent portions may be controlled so as to vary not only the exit area of the exhaust nozzle, but also the throat area of the exhaust nozzle. However, it has been found that the use of such discretised nozzles increases the radar return and reduces the aerodynamic efficiency of the exhaust nozzle.

It is therefore desirable to provide an improved variable-geometry convergent-divergent exhaust nozzle that overcomes some or all of these issues.

### Summary of the invention

According to an aspect of the present disclosure there is provided a variable-geometry convergent-divergent exhaust nozzle for a gas turbine engine, the variable-geometry convergent-divergent exhaust nozzle comprising: an exhaust duct configured to receive an exhaust flow of gas from a combustor of the gas turbine engine; a first flap assembly comprising a first proximal flap and a first distal flap; and a second flap assembly comprising a second proximal flap and a second distal flap. The first proximal flap is rotatably coupled to the exhaust duct and comprises a first entry surface that in part defines a nozzle passageway. The nozzle passageway is configured to convey the exhaust flow of gas to an exterior of the gas turbine engine. The second proximal flap is rotatably coupled to the exhaust duct and comprises a second entry surface that in part defines the nozzle passageway. The first distal flap is rotatably coupled to the first proximal flap. The second distal flap is rotatably coupled to the second proximal flap. The first distal flap comprises a first converging surface and a first diverging surface angled with respect to the first converging surface. The second distal flap comprises a second converging surface and a second diverging surface angled with respect to the second converging surface. The first converging surface and the second converging surface define at least in part a convergent portion of the nozzle passageway. The first diverging surface and the second diverging surface define at least in part a divergent portion of the nozzle passageway.

The first and second entry surfaces may be planar.

The first and second converging surfaces may be planar.

The first and second diverging surfaces may be planar.

An interior angle between the first converging surface and the first diverging surface may be between 130° and 150°. An interior angle between the second converging surface and the second diverging surface may be between 130° and 150°.

The first distal flap may comprise a first interface surface disposed between the first converging surface and the first diverging surface. The first interface surface may be a curved surface that smoothly connects the first converging surface and the first diverging surface. The second distal flap may comprise a second interface surface disposed between the second converging surface and the second diverging surface. The second interface surface may be a curved surface that smoothly connects the second converging surface and the second diverging surface. The first interface surface and the second interface surface may define at least in part a throat of the nozzle passageway.

An exit of the nozzle passageway may be defined in part by a distal end of the first diverging surface and a distal end of the second diverging surface.

The exhaust duct may comprise a first side wall and a second side wall. The exit of the nozzle passageway may be substantially rectangular and may be defined in part by the first side wall and the second side wall.

The first distal flap may be coupled to the first proximal flap at a first hinge for rotation about a first axis of rotation. The second distal flap may be coupled to the second proximal flap at a second hinge for rotation about a second axis of rotation. The first proximal flap may be coupled to the exhaust duct at a third hinge for rotation about a third axis of rotation. The second proximal flap may be coupled to the exhaust duct at a fourth hinge for rotation about a fourth axis of rotation.

A distance between the first and third hinges may be between 25% and 50% of a passageway surface length of the first flap assembly. A distance between the second and fourth hinges may be between 25% and 50% of a passageway surface length of the second flap assembly.

The variable-geometry convergent-divergent exhaust nozzle may further comprise a casing. The casing may extend around the first and second flap assemblies and axially cover the first hinge, the second hinge, the third hinge and the fourth hinge.

The variable-geometry convergent-divergent exhaust nozzle may further comprise a first actuator and a second actuator. The first actuator may have a first end coupled to the exhaust duct and a second end coupled to the first distal flap. The first actuator may be configured to actuate the first distal flap relative to the first proximal flap about a first axis of rotation. The second actuator may have a first end coupled to the exhaust duct and a second end coupled to the second distal flap. The second actuator may be configured to actuate the second distal flap relative to the second proximal flap about a second axis of rotation.

The variable-geometry convergent-divergent exhaust nozzle may further comprise a third actuator and a fourth actuator. The third actuator may have a first end coupled to the exhaust duct and a second end coupled to the first proximal flap. The third actuator may be configured to actuate the first proximal flap relative to the exhaust duct about a third axis of rotation. The fourth actuator may have a first end coupled to the exhaust duct and a second end coupled to the second proximal flap. The fourth actuator may be configured to actuate the second proximal flap relative to the exhaust duct about a fourth axis of rotation.

A length of the first converging surface may be between 10% and 30% of a length of the first diverging surface. A length of the second converging surface may be between 10% and 30% of a length of the second diverging surface.

There may be provided a gas turbine engine comprising a variable-geometry convergent-divergent exhaust nozzle as stated in any preceding statement.

### List of figures

For a better understanding of the present invention, and to show more clearly how it may be carried into effect, reference will now be made, by way of example, to the accompanying drawings, in which:
Figure 1 is a cross-sectional view of an example gas turbine engine and a variable-geometry convergent-divergent exhaust nozzle;
Figure 2 is a perspective view of the variable-geometry convergent-divergent exhaust nozzle in a first configuration in isolation;
Figure 3 is a perspective cross-sectional view of the variable-geometry convergent-divergent exhaust nozzle in the first configuration;
Figure 4 is a cross-sectional side view of the variable-geometry convergent-divergent exhaust nozzle in the first configuration;
Figure 5 is a perspective cross-sectional view of the variable-geometry convergent-divergent exhaust nozzle in a second configuration;
Figure 6 is a cross-sectional side view of the variable-geometry convergent-divergent exhaust nozzle in the second configuration; and
Figure 7 is a cross-sectional side view of the variable-geometry convergent-divergent exhaust nozzle in a third configuration.

### Detailed Description

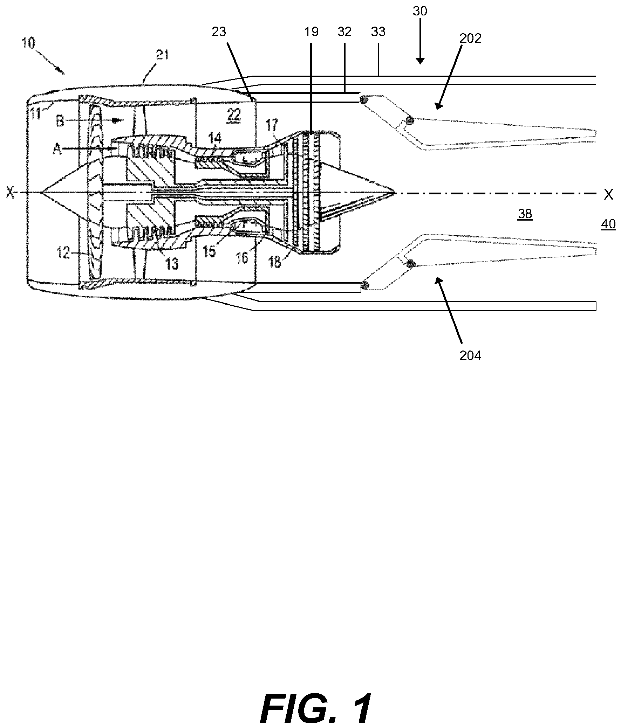

**Figure 1** shows a ducted fan gas turbine engine 10 having a principal and rotational axis X-X and a variable-geometry convergent-divergent exhaust nozzle 30. The engine 10 comprises, in axial flow series, an air intake 11, a propulsive fan 12, an intermediate pressure compressor 13, a high-pressure compressor 14, a combustor 15, a high-pressure turbine 16, an intermediate pressure turbine 17, a low-pressure turbine 18 and a core engine exhaust nozzle 19. A nacelle 21 generally surrounds the gas turbine engine 10 and defines the intake 11, a bypass duct 22 and a bypass exhaust nozzle 23.

During operation, air entering the intake 11 is accelerated by the fan 12 to produce two air flows: a first air flow A into the intermediate pressure compressor 13 and a second air flow B which passes through the bypass duct 22 to provide propulsive thrust. The intermediate pressure compressor 13 compresses the air flow A directed into it before delivering that air to the high pressure compressor 14 where further compression takes place.

The compressed air exhausted from the high-pressure compressor 14 is directed into the combustor 15 where it is mixed with fuel and the mixture combusted. The resultant hot combustion products then expand through, and thereby drive the high, intermediate and low-pressure turbines 16, 17, 18 before being exhausted through the core engine exhaust nozzle 19 to provide additional propulsive thrust. The high, intermediate and low-pressure turbines respectively drive the high and intermediate pressure compressors 14, 13 and the fan 12 by suitable interconnecting shafts.

The exhaust nozzle 30 is disposed at a rear end of the gas turbine engine 10 and generally comprises an exhaust duct 32, an exhaust casing 33, a first flap assembly 202 and a second flap assembly 204. The exhaust duct 32 is configured to receive an exhaust flow of gas from the combustor 15. The first and second flap assemblies 202, 204 in part define a nozzle passageway 38 configured to convey the exhaust flow of gas to an exterior 40 of the gas turbine engine 10.

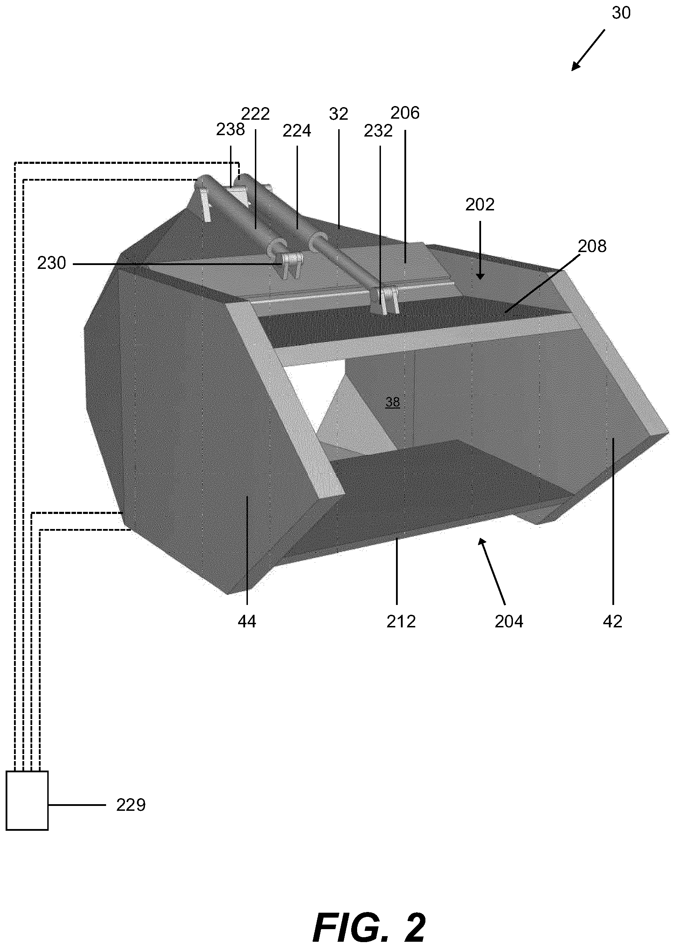

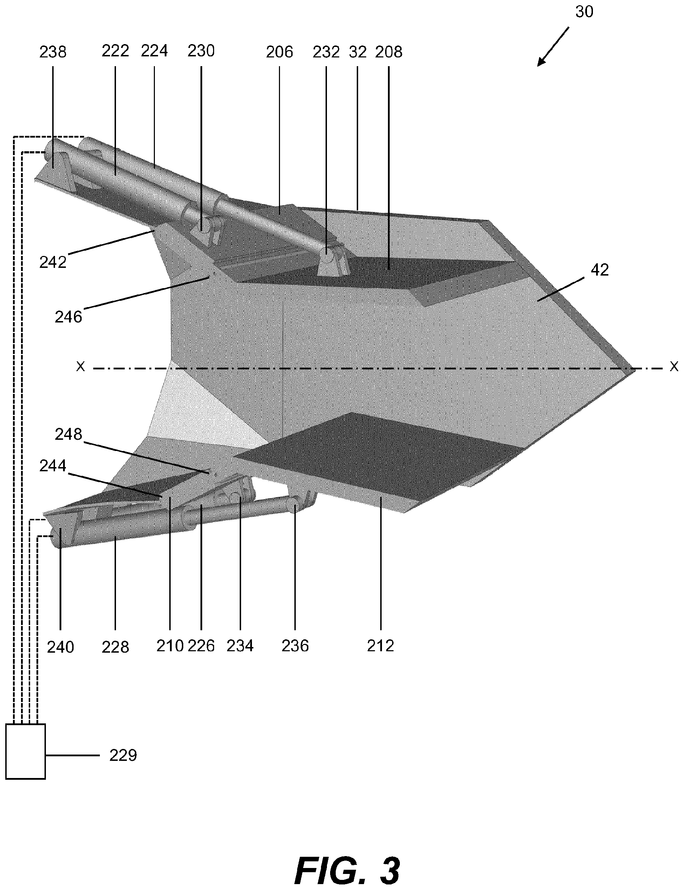

**Figure 2** is a perspective view of the exhaust nozzle 30 in a first configuration and **Figure 3** is a perspective cross-sectional view of the exhaust nozzle 30 in the first configuration. The exhaust casing 33 is not shown in Figures 2 and 3. The exhaust duct 32 comprises a first side wall 42 and a second side wall 44. The first and second side walls 42, 44 are spaced apart from each other. The first flap assembly 202 is disposed between the first and second side walls 42, 44 in an upper portion of the exhaust nozzle 30. The second flap assembly 204 is disposed between the first and second side walls 42, 44 in a lower portion of the exhaust nozzle 30.

The first flap assembly 202 comprises a first proximal flap 206 and a first distal flap 208. The second flap assembly 204 comprises a second proximal flap 210 and a second distal flap 212. The first distal flap 208 is rotatably coupled to the first proximal flap 206 at a first hinge 246 for rotation about a first axis of rotation. The second distal flap 212 is rotatably coupled to the second proximal flap 210 at a second hinge 248 for rotation about a second axis of rotation. The first proximal flap 206 is rotatably coupled to the exhaust duct 32 at a third hinge 242 for rotation about a third axis of rotation. The second proximal flap 210 is rotatably coupled to the exhaust duct 32 at a fourth hinge 244 for rotation about a fourth axis of rotation.

The exhaust nozzle 30 comprises a first actuator 224, a second actuator 228, a third actuator 222 and a fourth actuator 226. The first, second, third and fourth actuators 224, 228, 222, 226 are connected to a controller 229. The first distal flap 208 comprises a first projection 232 to which a first end of the first actuator 224 is pivotally coupled at a first pivot. The second distal flap 212 comprises a second projection 236 to which a first end of the second actuator 228 is pivotally coupled at a second pivot. The first proximal flap 206 comprises a third projection 230 to which a first end of the third actuator 222 is pivotally coupled at a third pivot. The second proximal flap 210 comprises a fourth projection 234 to which a first end of the fourth actuator 226 is pivotally coupled at a fourth pivot. An upper portion of the exhaust duct 32 comprises fifth projection 238 to which a second end of the first actuator 224 is pivotally coupled at a fifth pivot and to which a second end of the third actuator 222 is pivotally coupled at a seventh pivot. A lower portion of the exhaust duct 32 comprises a sixth projection 240 to which a second end of the second actuator 228 is pivotally coupled at a sixth pivot and a second end of the fourth actuator 226 is pivotally coupled at an eighth pivot.

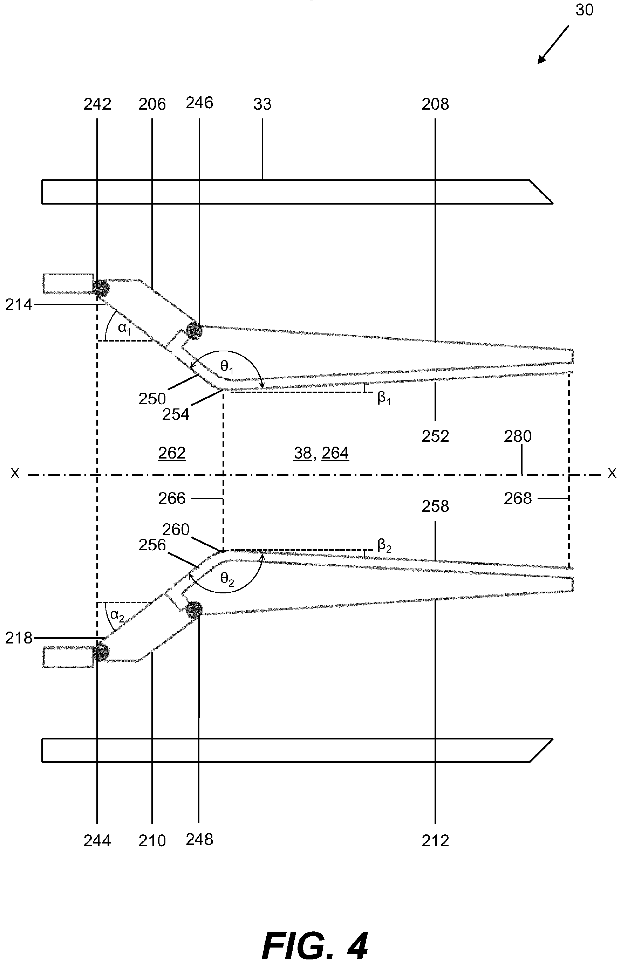

**Figure 4** is a simplified cross-sectional side view of the exhaust nozzle 30 in the first configuration. The exhaust nozzle 30 may be configured in the manner shown in Figure 4 during dry thrust operation. In the simplified schematic cross-sectional view of Figure 4, certain components of the exhaust nozzle 30 are not shown so as to show certain geometric properties of the exhaust nozzle 30. However, in contrast to Figures 2 and 3, the casing 33 is shown in Figure 4 and extends around the first and second flap assemblies 202, 204. The casing 33 axially covers the first, second, third and fourth hinges 246, 248, 242, 244. That is, the casing 33 extends beyond the first, second, third and fourth hinges 246, 248, 242, 244 in an axial direction (i.e. along the principal and rotational axis X-X or along a central axis 280 of the exhaust nozzle 30).

The first proximal flap 206 comprises a first entry surface 214. The first entry surface 214 is planar. The first distal flap 208 comprises a first converging surface 250, a first diverging surface 252 and a first interface surface 254. The first converging surface 250 and the first diverging surface 252 are planar. A first obtuse interior angle θ₁ is formed between the first converging surface 250 and the first diverging surface 252. In the exhaust nozzle shown in Figure 4, the first obtuse interior angle θ₁ is approximately 140°. However, it will be appreciated that the first obtuse interior angle θ₁ may be any suitable angle. For example, the first obtuse interior angle θ₁ may be between 130° and 150° inclusive. The first interface surface 254 is disposed between and connects the first converging surface 250 and the first diverging surface 252. The first interface surface 254 is a continuous curved surface that smoothly connects the first converging surface 250 and the first diverging surface 252. The smooth first interface surface 254 improves the discharge coefficient of the exhaust nozzle 30

The second proximal flap 210 comprises a second entry surface 218. The second entry surface 218 is planar. The second distal flap 212 comprises a second converging surface 256, a second diverging surface 258 and a second interface surface 260. The second converging surface 256 and the second diverging surface 258 are planar. A second obtuse interior angle θ₂ is formed between the second converging surface 256 and the second diverging surface 258. In the exhaust nozzle shown in Figure 4, the second obtuse interior angle θ₂ is approximately 140°. However, it will be appreciated that the second obtuse interior angle θ₂ may be any suitable angle. For example, the second obtuse interior angle θ₂ may be between 130° and 150° inclusive. The second interface surface 260 is disposed between and connects the second converging surface 256 and the second diverging surface 258. The second interface surface 260 is a continuous curved surface that smoothly connects the second converging surface 256 and the second diverging surface 258. The smooth second interface surface 260 improves the discharge coefficient of the exhaust nozzle 30.

The first entry surface 214, the first converging surface 250, the first interface surface 254 and the first diverging surface 252 are disposed in series in an upper portion of the exhaust nozzle 30 and in part define the nozzle passageway 38. The second entry surface 218, the second converging surface 256, the second interface surface 260 and the second diverging surface 258 are disposed in series in a lower portion of the exhaust nozzle 30 and in part define the nozzle passageway 38. The nozzle passageway 38 comprises a convergent portion 262 and a divergent portion 264. The area of the nozzle passageway 38 reduces in a downstream direction in a convergent portion 262 of the passageway 38. The area of the nozzle passageway 38 increases in a downstream direction in a divergent portion 264 of the nozzle passageway 38. The first and second converging surfaces 250, 256 partly define the convergent portion 262 of the nozzle passageway 38. The first and second diverging surfaces 252, 258 partly define the divergent portion 264 of the nozzle passageway 38.

The first interface surface 254 and the second interface surface 260 define a throat 266 of the nozzle passageway 38 (i.e. a region of the nozzle passageway 38 that has its smallest cross-sectional area). The throat 266 is also defined in part by the first and second side walls 42, 44 and is substantially rectangular. The throat 266 is disposed between the convergent portion 262 and the divergent portion 264 of the passageway 38. An exit 268 of the nozzle passageway 38 is defined in part by a distal end of the first diverging surface 252 and a distal end of the second diverging surface 258. The exit 268 is also defined in part by the first and second side walls 42, 44 and is substantially rectangular.

The passageway surface length of the first flap assembly 202 is defined as the minimum length along the first entry surface 214, the first converging surface 250, the first interface surface 254 and the first diverging surface 252 between the third hinge 242 and the exit 268. The distance between the first and third hinges 246, 242 is between 20% and 50% of the passageway surface length of the first flap assembly 202. The passageway surface length of the second flap assembly 204 is defined as the minimum length along the second entry surface 218, the second converging surface 256, the second interface surface 260 and the second diverging surface 258 between the fourth hinge 244 and the exit 268. The distance between the second and fourth hinges 248, 244 is between 20% and 50% of the passageway surface length of the second flap assembly 204.

The length of the first converging surface 250 is defined as the minimum length along the first converging surface 250 from an upstream edge of the first converging surface 250 (i.e. from the first hinge 246) to a downstream edge of the first converging surface 250 (i.e. to the first interface surface 254). The length of the first diverging surface 252 is defined as the minimum length along the first diverging surface 252 from an upstream edge of the first diverging surface 252 (i.e. from the first interface surface 254) to a downstream edge of the first diverging surface 252 (i.e. to the exit 268). The length of the second converging surface 256 is defined as the minimum length along the second converging surface 256 from an upstream edge of the second converging surface 256 (i.e. from the second hinge 248) to a downstream edge of the second converging surface 256 (i.e. to the second diverging surface 258). The length of the second diverging surface 258 is defined as the minimum length along the second diverging surface 258 from an upstream edge of the second diverging surface 258 (i.e. from the second interface surface 260) to a downstream edge of the second diverging surface 258 (i.e. the exit 268). The length of the first converging surface 250 is between 10% and 30% of the length of the first diverging surface 252. The length of the second converging surface 256 is between 10% and 30% of the length of the second diverging surface 258.

By providing a variable-geometry convergent-divergent exhaust nozzle 30 in which the first and second distal flaps 208, 212 comprise respective converging and diverging surfaces 250, 256, 252, 256, the connection between the first and second distal flaps 208, 212 and the first and second proximal flaps 206, 210 is not located at the throat 266 of the nozzle passageway 38 (i.e. the connection is decoupled from the throat) and is instead hidden from radar illumination. This reduces the radar return of the variable-geometry convergent-divergent exhaust nozzle 30, which allows the variable-geometry convergent-divergent exhaust nozzle 30 to operate at high expansion ratios or regions such as supercruise while maintaining a low radar return signature.

In the first configuration shown in Figure 4, the first proximal flap 206 is positioned such that the first entry surface 214 is angled toward a central axis 280 of the exhaust nozzle 30 (which may be aligned with or parallel to the principal and rotational axis X-X) in a downstream direction. In particular, the first entry surface 214 is angled at a non-zero angle α₁ with respect to a central axis 280 of the exhaust nozzle 30. In addition, the second proximal flap 210 is positioned such that the second entry surface 218 is angled toward the central axis 280 in a downstream direction. In particular, the second entry surface 218 is angled at a non-zero angle α₂ with respect to the central axis 280. In Figure 4, the angles α₁ and α₂ are shown as being approximately 40°. However, in alternative embodiments, the controller 229 may be configured to control the first and second proximal flaps 206, 210 such that the angles α₁ and α₂ cannot be increased to more than 30°, since operating the exhaust nozzle 30 in this excluded range would reduce the discharge coefficient of the exhaust nozzle 30.

The first distal flap 208 is positioned such that the first diverging surface 252 is angled away from the central axis 280 in a downstream direction. In particular, the first diverging surface 252 is angled at a non-zero angle β₁ with respect to the central axis 280. In addition, the second distal flap 212 is positioned such that the second diverging surface 258 is angled away from the central axis 280 in a downstream direction. In particular, the second diverging surface 258 is angled at a non-zero angle β₂ with respect to the central axis 280. In Figure 4, the angles β₁ and β₂ are shown as being approximately 3°.

The controller 229 may be is configured to control the first and second distal flaps 208, 212 such that the angles β₁ and β₂ cannot be decreased below 0°.

During operation of the exhaust nozzle 30, the first actuator 224 is able to actuate the first distal flap 208 relative to the first proximal flap 206 about the first axis of rotation at the first hinge 246, the second actuator 228 is able to actuate the second distal flap 212 relative to the second proximal flap 210 about the second axis of rotation at the second hinge 248, the third actuator 222 is able to actuate the first proximal flap 206 relative to the exhaust duct 32 about the third axis of rotation at the third hinge 242 and the fourth actuator 226 is able to actuate the second proximal flap 210 relative to the exhaust duct 32 about the fourth axis of rotation at the fourth hinge 244. Accordingly, the exhaust nozzle 30 is a two-parameter nozzle. The controller 229 controls actuation of the first, second, third and fourth actuators 224, 228, 222, 226.

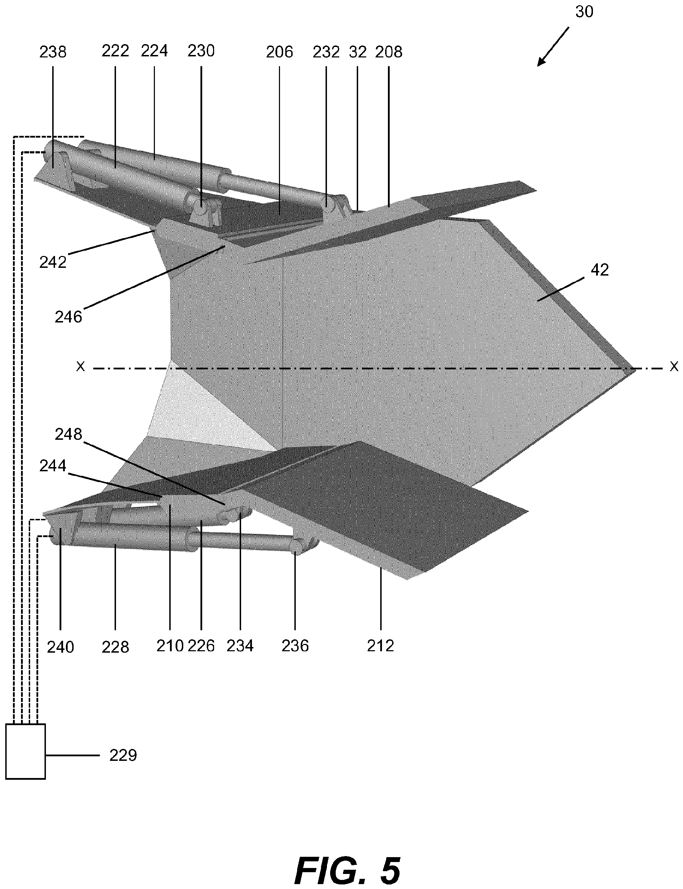

The first and second proximal and distal flaps 206, 208, 210, 212 can be actuated to the position shown in Figures 2 to 4 so as to place the exhaust nozzle 30 in the first configuration. Examples of various additional combinations of positions that the first and second proximal and distal flaps 206, 208, 210, 212 can be actuated to in other configurations are described below with reference to Figures 5 to 7.

**Figure 5** is a perspective cross-sectional view of the exhaust nozzle 30 in isolation in a second configuration. The exhaust nozzle 30 may be configured in the manner shown in Figure 5 during reheat operation. In the second configuration, the first and second proximal flaps 206, 210 have been actuated to an inner position (i.e. a position in which the downstream ends of the first and second proximal flaps 206, 210 are relatively close to the central axis 280) and the first and second distal flaps 208, 212 have been actuated to an outer position (i.e. a position in which the downstream ends of the first and second distal flaps 208, 212 are relatively far away from the central axis 280).

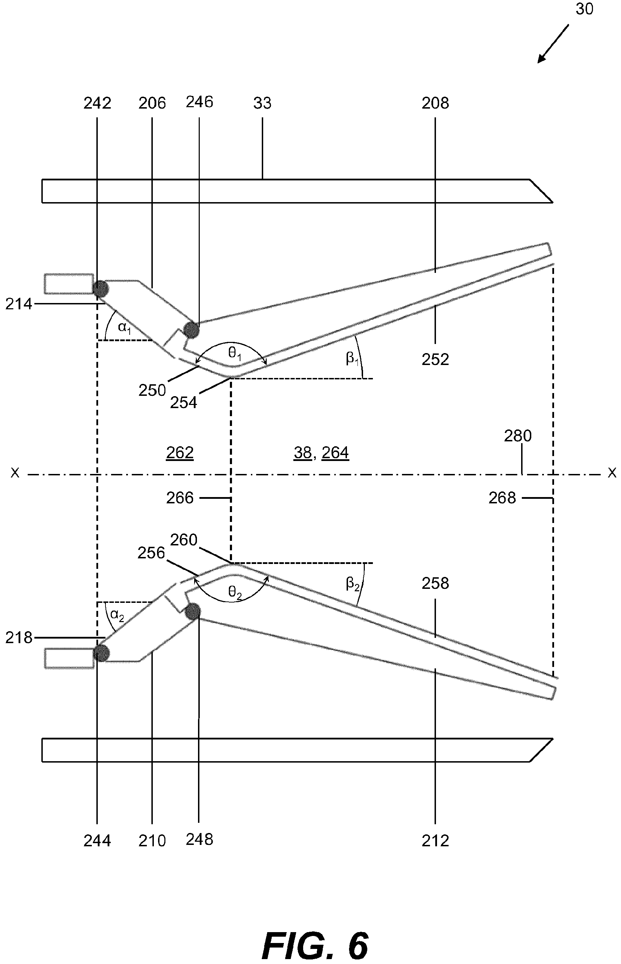

**Figure 6** is a cross-sectional side view of the exhaust nozzle 30 in the second configuration. The angles α₁ and α₂ are same in the first and second configurations. However, the angles β₁ and β₂ are greater in the second configuration than they are in the first configuration. In particular, the angles β₁ and β₂ are approximately 20°. Accordingly, the areas of the throat 266 and the exit 266 are greater in the second configuration than they are in the first configuration.

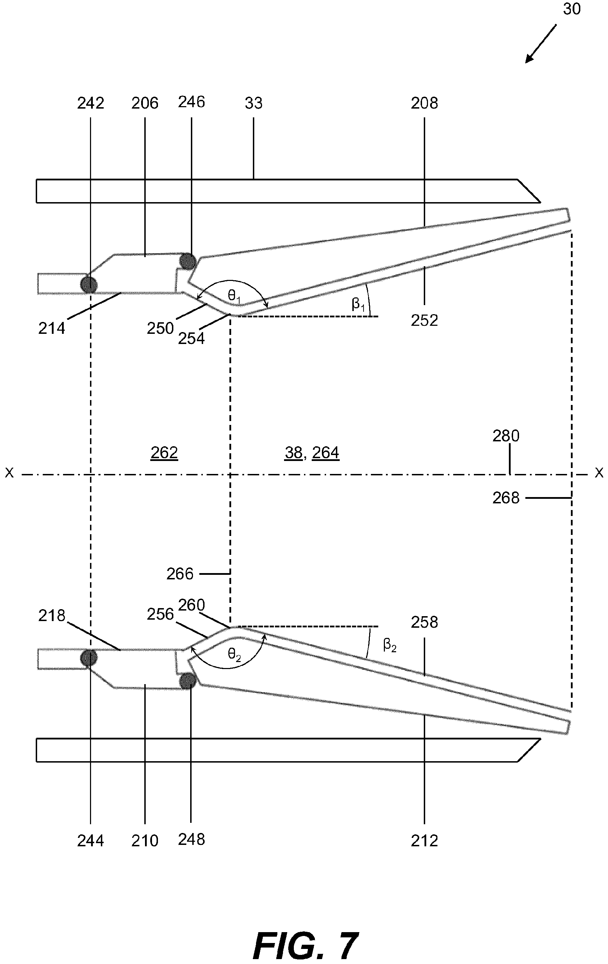

**Figure 7** is a cross-sectional side view of the exhaust nozzle 30 in a third configuration. The exhaust nozzle 30 may be configured in the manner shown in Figure 7 during supercruise operation. The angles α₁ and α₂ have reduced to zero in the third configuration. The controller 229 is configured to control the first and second proximal flaps 206, 210 such that the angles α₁ and α₂ cannot be reduced to less than zero, since operating the exhaust nozzle 30 in this excluded range would reduce the discharge coefficient of the exhaust nozzle 30. In addition, the angles β₁ and β₂ are greater in the third configuration than they are in the first configuration and less than they are in the second configuration. In particular, the angles β₁ and β₂ are approximately 14°. Furthermore, the areas of the throat 266 and the exit 266 are greater in the third configuration than they are in the first and second configurations.

Although it has been described that the exhaust nozzle 30 is a two-parameter nozzle, in alternative embodiments the exhaust nozzle 30 may be a one parameter nozzle. In such arrangements, each flap assembly 202, 204 may be actuated by a single actuator. For example, each flap assembly may comprise a single actuator that is connected to both the proximal and distal flap via a fixed link of the type known in the art and is able to actuate the proximal and distal flaps via the fixed link.

Although it has been described that the variable-geometry convergent-divergent exhaust nozzle 30 comprises a rectangular exit 268 defined by first and second flap assemblies 202, 204 and first and second side walls 42, 44, in alternative embodiments the variable-geometry convergent-divergent exhaust nozzle 30 may comprise more than two flap assemblies 202, 204 that extend around the central axis 280 and that are configured to define the nozzle passageway 38. In such arrangements, the entire periphery of the nozzle passageway 38 may be defined by the flap assemblies 202, 204 such that the passageway is not defined by sidewalls of the type described above. By way of example only, such an alternative variable-geometry convergent-divergent exhaust nozzle 30 may comprise between 10 and 30 flap assemblies 202, 204 that are disposed around the central axis. In such arrangements, the outlet defined by the flap assemblies 202, 204 may be approximately circular. In such arrangements, the flap assemblies 202, 204 may have corresponding features to those described above and function in a corresponding manner.

In the foregoing description, the first flap is rotatably coupled to the exhaust duct 32 directly. However, it will be appreciated that the rotatable couplings between the first and second flaps and the exhaust duct 32 may instead be indirect rotatable couplings.

That is, the first flap may be rotatably coupled to the exhaust duct 32 via intermediate components and the second flap may be rotatably coupled to the exhaust duct 32 via intermediate components.

It will be appreciated that, in the foregoing description, the term "proximal" is used to denote features relatively close to the connection between the first and second flap assemblies and the exhaust duct and the term "distal" is used to denote features relatively far away from the connection between the first and second flap assemblies and the exhaust duct.

## Claims

1. A variable-geometry convergent-divergent exhaust nozzle (30) for a gas turbine engine (10), the variable-geometry convergent-divergent exhaust nozzle (30) comprising:
an exhaust duct (32) configured to receive an exhaust flow of gas from a combustor (15) of the gas turbine engine (10);
a first flap assembly (202) comprising a first proximal flap (206) and a first distal flap (208); and
a second flap assembly (204) comprising a second proximal flap (210) and a second distal flap (212),
wherein the first proximal flap (206) is rotatably coupled to the exhaust duct (32) and comprises a first entry surface (214) that in part defines a nozzle passageway (38), the nozzle passageway (38) being configured to convey the exhaust flow of gas to an exterior (40) of the gas turbine engine (10),
wherein the second proximal flap (210) is rotatably coupled to the exhaust duct (32) and comprises a second entry surface (218) that in part defines the nozzle passageway (38),
wherein the first distal flap (208) is rotatably coupled to the first proximal flap (206),
wherein the second distal flap (212) is rotatably coupled to the second proximal flap (210),
wherein the first distal flap (208) comprises a first converging surface (250) and a first diverging surface (252) angled with respect to the first converging surface (250),
wherein the second distal flap (212) comprises a second converging surface (256) and a second diverging surface (258) angled with respect to the second converging surface (256),
wherein the first converging surface (250) and the second converging surface (256) define at least in part a convergent portion (262) of the nozzle passageway (38),
wherein the first diverging surface (252) and the second diverging surface (258) define at least in part a divergent portion (264) of the nozzle passageway (38).

2. The variable-geometry convergent-divergent exhaust nozzle (30) as claimed in Claim 1, wherein the first and second entry surfaces (214, 218) are planar.

3. The variable-geometry convergent-divergent exhaust nozzle (30) as claimed in Claim 1 or Claim 2, wherein the first and second converging surfaces (250, 256) are planar.

4. The variable-geometry convergent-divergent exhaust nozzle (30) as claimed in any one of the preceding claims, wherein the first and second diverging surfaces (252, 258) are planar.

5. The variable-geometry convergent-divergent exhaust nozzle (30) as claimed in Claim 4 when appended to Claim 3, wherein an interior angle (θ₁) between the first converging surface (250) and the first diverging surface (252) is between 130° and 150°, wherein an interior angle (θ₂) between the second converging surface (256) and the second diverging surface (258) is between 130° and 150°.

6. The variable-geometry convergent-divergent exhaust nozzle (30) as claimed in any one of the preceding claims, wherein the first distal flap (208) comprises a first interface surface (254) disposed between the first converging surface (250) and the first diverging surface (252), wherein the first interface surface (254) is a curved surface that smoothly connects the first converging surface (250) and the first diverging surface (252), wherein the second distal flap (212) comprises a second interface surface (260) disposed between the second converging surface (256) and the second diverging surface (258), wherein the second interface surface (260) is a curved surface that smoothly connects the second converging surface (256) and the second diverging surface (258), wherein the first interface surface (254) and the second interface surface (260) define at least in part a throat (266) of the nozzle passageway (38).

7. The variable-geometry convergent-divergent exhaust nozzle (30) as claimed in any one of the preceding claims, wherein an exit (268) of the nozzle passageway (38) is defined in part by a distal end of the first diverging surface (252) and a distal end of the second diverging surface (258).

8. The variable-geometry convergent-divergent exhaust nozzle (30) as claimed in Claim 7, wherein the exhaust duct (32) comprises a first side wall (42) and a second side wall (44), wherein the exit (268) of the nozzle passageway (38) is substantially rectangular and is defined in part by the first side wall (42) and the second side wall (44).

9. The variable-geometry convergent-divergent exhaust nozzle (30) as claimed in any one of the preceding claims, wherein the first distal flap (208) is coupled to the first proximal flap (206) at a first hinge (246) for rotation about a first axis of rotation, wherein the second distal flap (212) is coupled to the second proximal flap (210) at a second hinge (248) for rotation about a second axis of rotation, wherein the first proximal flap (206) is coupled to the exhaust duct (32) at a third hinge (242) for rotation about a third axis of rotation, wherein the second proximal flap (210) is coupled to the exhaust duct (32) at a fourth hinge (244) for rotation about a fourth axis of rotation.

10. The variable-geometry convergent-divergent exhaust nozzle (30) as claimed in Claim 9, wherein a distance between the first and third hinges (246, 242) is between 25% and 50% of a passageway surface length of the first flap assembly (202), wherein a distance between the second and fourth hinges (248, 244) is between 25% and 50% of a passageway surface length of the second flap assembly (204).

11. The variable-geometry convergent-divergent exhaust nozzle (30) as claimed in Claim 9 or Claim 10, further comprising a casing (33), wherein the casing (33) extends around the first and second flap assemblies (202, 204) and axially covers the first hinge (246), the second hinge (248), the third hinge (242) and the fourth hinge (244).

12. The variable-geometry convergent-divergent exhaust nozzle (30) as claimed in any one of the preceding claims, further comprising a first actuator (222) and a second actuator (224), wherein the first actuator (222) has a first end coupled to the exhaust duct (32) and a second end coupled to the first distal flap (208), wherein the first actuator (222) is configured to actuate the first distal flap (208) relative to the first proximal flap (206) about a first axis of rotation, wherein the second actuator (224) has a first end coupled to the exhaust duct (32) and a second end coupled to the second distal flap (212), wherein the second actuator (224) is configured to actuate the second distal flap (212) relative to the second proximal flap (210) about a second axis of rotation.

13. The variable-geometry convergent-divergent exhaust nozzle (30) as claimed in Claim 12, further comprising a third actuator (226) and a fourth actuator (228), wherein the third actuator (226) has a first end coupled to the exhaust duct (32) and a second end coupled to the first proximal flap (206), wherein the third actuator (226) is configured to actuate the first proximal flap (206) relative to the exhaust duct (32) about a third axis of rotation, wherein the fourth actuator (228) has a first end coupled to the exhaust duct (32) and a second end coupled to the second proximal flap (210), wherein the fourth actuator (228) is configured to actuate the second proximal flap (210) relative to the exhaust duct (32) about a fourth axis of rotation.

14. The variable-geometry convergent-divergent exhaust nozzle (30) as claimed in any one of the preceding claims, wherein a length of the first converging surface (250) is between 10% and 30% of a length of the first diverging surface (252), wherein a length of the second converging surface (256) is between 10% and 30% of a length of the second diverging surface (258).

15. A gas turbine engine (10) comprising a variable-geometry convergent-divergent exhaust nozzle (30) as claimed in any one of Claims 1 to 14.
